# EUROPÄISCHE PATENTSCHRIFT

(11) **EP 2 786 356 B1**
(45) Veröffentlichungstag und Bekanntmachung des Hinweises auf die Patenterteilung: **10.05.2023**
(21) Anmeldenummer: 12821237.0
(22) Anmeldetag: 27.11.2012
(51) Int. Cl.: G07D 11/00

(54) **SYSTEM UND VERFAHREN ZUM BEARBEITEN VON BANKNOTEN**
SYSTEM AND METHOD FOR PROCESSING BANKNOTES
POCEDE ET SYSTEME DE TRAITEMENT DE BILLETS DE BANQUE

(30) Priorität: 29.11.2011 DE 102011119897
(43) Veröffentlichungstag der Anmeldung: 08.10.2014
(73) Patentinhaber: Giesecke+Devrient Currency Technology GmbH, 81677 München (DE)
(72) Erfinder: PIETSCHKER, Andrej, 81825 München (DE)
(74) Vertreter: Giesecke + Devrient IP
(86) Internationale Anmeldenummer: PCT/DE2012/001137
(87) Internationale Veröffentlichungsnummer: WO 2013/079050

(56) Entgegenhaltungen:
- EP-A1- 1 413 993
- WO-A1-02/075671
- WO-A1-2005/064550
- US-A1- 2010 032 351
- US-B1- 7 929 749

## Beschreibung

Die vorliegende Erfindung betrifft ein System sowie ein Verfahren zum Bearbeiten von Wertdokumenten, insbesondere Banknoten. Unter dem Begriff "Bearbeiten" von Banknoten wird hier insbesondere das Zählen, das Prüfen und das Sortieren von Banknoten verstanden.

Die vorliegende Erfindung ist prinzipiell uneingeschränkt für jede Art von blattgutartigen Wertdokumenten verwendbar. Ein besonderer Fokus der vorliegenden Erfindung liegt jedoch auf Banknoten, so dass im Nachfolgenden der Einfachheit halber anstatt des allgemeinen Begriffs "Wertdokumente" in der Regel der Begriff "Banknoten" verwendet wird, ohne dass dies in einschränkender Weise zu verstehen ist.

Bei der Bearbeitung von Banknoten kommen Banknotenbearbeitungsmaschinen zum Einsatz, die üblicherweise aus mehreren Abschnitten oder Bearbeitungszonen bestehen, die nacheinander angeordnet sind und unterschiedliche Arbeitsschritte ausführen. Die Anzahl, Art und Anordnung der Abschnitte kann abhängig von den Anforderungen an die Bearbeitung der Banknoten variieren. Typischerweise umfasst eine Banknotenbearbeitungsmaschine mindestens einen Eingabeabschnitt mit einem Eingabefach, einen Bedienabschnitt sowie einen Ausgabeabschnitt mit mehreren Ausgabefächem. Nach der Eingabe in das Eingabefach werden die Banknoten im Eingabeabschnitt vereinzelt und in einer Prüfeinrichtung von Sensoren erfasst, um solche Banknoten zu erkennen, die nicht mehr dazu geeignet sind, am Banknotenumlauf teilzunehmen. Diese werden von den umlauffähigen Banknoten getrennt und gesondert ausgegeben oder gegebenenfalls vernichtet. Die umlauffähigen Banknoten werden mittels eines Transportsystems weiter transportiert und in den Ausgabefächern des Ausgabeabschnitts beispielsweise je nach dem Wert einer Banknote sortiert ausgegeben. Optional kann eine solche Banknotenbearbeitungsmaschine über ein Schreddermodul zum Vernichten ausgewählter Banknoten und/ oder Module zum Stapeln oder Bündeln von bearbeiteten Banknoten verfügen. Der Ablauf der Banknotenbearbeitung kann von einer Bedienperson über eine Benutzerschnittstelle, die sich üblicherweise in dem Bedienabschnitt befindet, gesteuert und überwacht werden.

Zur koordinierten Steuerung der vorstehend beschriebenen Komponenten einer Banknotenbearbeitungsmaschine weist diese in der Regel eine zentrale Steuereinrichtung auf, bei der es sich häufig um einen in der Banknotenbearbeitungsmaschine verbauten Industrie-PC bzw. ein entsprechendes Mainboard handelt. Ein Industrie-PC basiert üblicherweise auf einem IBM-kompatiblen Personal Computer und kann mit Software für solche Geräte betrieben werden. Derartige auf einem IBM-kompatiblen Personal Computer basierende Industrie-PCs haben infolge der Massenproduktion viele Vorzüge, wie einen hohen Standardisierungsgrad sowohl hinsichtlich der Hardware als auch der Software sowie ein großes Angebot an Peripheriekomponenten und Anwendungssoftware. Ein Industrie-PC muss gegenüber den Geräten für den Bürobereich (Office-PC) besonderen Anforderungen genügen und wird in der Regel besonders robust z.B. gegenüber Umwelteinflüssen oder elektromagnetischen Störungen und insgesamt weitgehend ausfallsicher ausgelegt.

Ein derartiger in einer Banknotenbearbeitungsmaschine verbauter Industrie-PC bzw. ein entsprechendes Mainboard werden oftmals mit einem herkömmlichen PC-Betriebssystem, z.B. Windows oder Linux, betrieben, das in einer nicht-flüchtigen Speichereinheit, z.B. einer Festplatte, des Industrie-PCs hinterlegt ist. Neben dem Betriebssystem sind auf der Speichereinheit des Industrie-PCs in der Regel weitere Softwaremodule installiert. Je nachdem für welche Anwendungen eine Banknotenbearbeitungsmaschine eingesetzt wird, können dabei auf der Speichereinheit neben den Softwaremodulen, die für den Standardbetrieb einer Banknotenbearbeitungsmaschine notwendig sind, wie beispielsweise jeweilige Softwaremodule zur Steuerung der Prüfeinrichtung, des Transportsystems und/ oder einer Benutzerschnittstelle (beispielsweise in Form eines Touchscreens) der Banknotenbearbeitungsmaschine, weitere unter Umständen optionale Softwaremodule installiert sein, die nicht für den Standardbetrieb der Banknotenbearbeitungsmaschine notwendig sind, sondern zusätzliche Anwendungen betreffen, die insbesondere die Verarbeitung der im Standardbetrieb der Banknotenbearbeitungsmaschine anfallenden Daten betreffen, wie z.B. die Verarbeitung von Rohbilddaten, die Erfassung von Seriennummern und dergleichen.

Die Anforderungen an die Leistungsfähigkeit der Steuereinrichtung einer Banknotenbearbeitungsmaschine nehmen immer mehr zu, da ein wichtiges Gütemerkmal einer Banknotenbearbeitungsmaschine die Geschwindigkeit ist, mit der Banknoten von der Maschine bearbeitet, z.B. sortiert werden können (d.h. die Durchsatzrate). Die Bearbeitungsgeschwindigkeiten moderner Banknotenbearbeitungsmaschinen erreichen Werte von bis zu 50 Banknoten pro Sekunde. Werden bei derartigen Bearbeitungsgeschwindigkeiten z.B. digitale Bilder von Banknoten mit einer hinreichenden Auflösung erstellt, die es erlaubt Sicherheitsmerkmale der Banknoten zu überprüfen, fallen beim Betrieb der Banknotenbearbeitungsmaschine Bilddaten in einer Größe von bis zu einigen Gigabyte pro Sekunde an. Werden überdies Bilder der Vorderseite und der Rückseite der Banknote und/ oder Bilder in unterschiedlichen Wellenlängenbereichen erstellt, fallen noch größere Datenmengen an, die von der zentralen Steuereinrichtung der Banknotenbearbeitungsmaschine verarbeitet werden müssen.

Damit derartige Datenmengen in Echtzeit von der Banknotenbearbeitungsmaschine verarbeitet werden können, wird herkömmlich der in der Banknotenbearbeitungsmaschine verbaute Industrie-PC bzw. ein entsprechendes Mainboard von vornherein so ausgelegt, dass dieser neben dem zum Standardbetrieb der Banknotenbearbeitungsmaschine notwendigen Aufgaben derartige "optionale" Aufgaben insbesondere zur Datenverarbeitung bewältigen kann, d.h. eine Prozessoreinheit mit hoher Prozessorleistung aufweist. Bei einem solchen Ansatz bei der Ausgestaltung der Steuereinrichtung einer Banknotenbearbeitungsmaschine kann jedoch das Problem auftreten, dass die Steuereinrichtung für den Standardbetrieb zu leistungsfähig ausgelegt ist, da sich beispielsweise die Anforderungen und Bedürfnisse eines Betreibers einer Banknotenbearbeitungsmaschine mit der Zeit ändern können, indem beispielsweise die optionale Aufnahme und/ oder Verarbeitung von Rohbilddaten nicht mehr benötigt wird und oder die Menge der zu bearbeitenden Banknoten abnimmt, und dadurch Ressourcen verschwendet werden. Es kann jedoch auch der umgekehrte Fall auftreten, dass aufgrund gesteigerter Anforderungen eines Betreibers einer Banknotenbearbeitungsmaschine die dort verbaute zentrale Steuereinrichtung nicht leistungsfähig genug ist, um den gesteigerten Anforderungen gerecht zu werden, was in der Regel bedeutet, dass der Betreiber eine komplett neue Banknotenbearbeitungsmaschine erwerben muss.

Die US 7 929 749 B1 beschreibt ein System zum Speichern statistischer Daten von Geldscheinen in einem Währungsverarbeitungsgerät.

Die US 2010/032351 A1 beschreibt ein Verfahren zum Zerstören von Banknoten.

Die EP 1 413 993 A1 beschreibt ein tragbares Gerät zur Konfiguration einer Münz- oder Wertpapierverarbeitungsvorrichtung.

Die WO 02/075671 A1 beschreibt eine Dokumenthandhabungsmaschine.

Die WO 2005/064550 A1 beschreibt ein System aus Banknotenbearbeitungsmaschinen.

Vor diesem Hintergrund stellt sich der vorliegenden Erfindung die Aufgabe, ein System und ein Verfahren zur Bearbeitung von Banknoten bereitzustellen, bei denen wenigstens eine Banknotenbearbeitungsmaschine zum Einsatz kommt, die flexibel an die Bedürfnisse des Betreibers der Banknotenbearbeitungsmaschine angepasst werden kann.

Diese Aufgabe wird erfindungsgemäß durch den Gegenstand von Anspruch 1 gelöst. Ein entsprechendes Verfahren zur Bearbeitung von Banknoten ist Gegenstand des unabhängigen Verfahrensanspruchs. Vorteilhafte Weiterbildungen der Erfindung sind in den Unteransprüchen definiert.

Gemäß einem ersten Aspekt der Erfindung wird ein System zum Bearbeiten von Wertdokumenten, insbesondere Banknoten, bereitgestellt. Das System umfasst wenigstens eine Banknotenbearbeitungsmaschine mit einer zentralen Steuereinrichtung, auf der nur die Softwaremodule implementiert sind, die zum Standardbetrieb der Banknotenbearbeitungsmaschine notwendig sind, insbesondere zum Zählen, Prüfen und/ oder Sortieren von Banknoten. Ferner umfasst das System wenigstens einen Anwendungsserver, der mit der Banknotenbearbeitungsmaschine über ein externes Kommunikationsnetzwerk in Verbindung steht und auf dem wenigstens ein weiteres Softwaremodul implementiert ist, das auf dem Anwendungsserver ausgeführt wird und eine Anwendung bereitstellt, die zumindest eine über den Standardbetrieb der Banknotenbearbeitungsmaschine hinausgehende Funktion bereitstellt.

Gemäß einem zweiten Aspekt der Erfindung wird ein Verfahren zum Bearbeiten von Wertdokumenten, insbesondere Banknoten, bereitgestellt. Das Verfahren umfasst die Schritte des Ausführens der Softwaremodule auf einer Banknotenbearbeitungsmaschine, die für den Standardbetrieb der Banknotenbearbeitungsmaschine erforderlich sind, insbesondere zum Zählen, Prüfen und/oder Sortieren von Banknoten, sowie des Ausführens wenigstens eines weiteren Softwaremoduls auf einem Anwendungsserver, der über ein externes Kommunikationsnetzwerk mit der Banknotenbearbeitungsmaschine kommunizieren kann, um somit eine Anwendung bereitzustellen, die zumindest eine über den Standardbetrieb der Banknotenbearbeitungsmaschine hinausgehende Funktion bereitstellt.

Wesentlich für die Erfindung ist somit insbesondere, dass im Prinzip optionale Anwendungen, die durch entsprechende Softwaremodule bereitgestellt werden und für den Standardbetrieb einer Banknotenbearbeitungsmaschine nicht notwendig sind, auf den Anwendungsserver verlagert werden, der somit je nach die momentanen Anforderungen an die Banknotenbearbeitungsmaschine dieser flexibel seine Leistungsfähigkeit bereitstellen kann.

Gemäß einer bevorzugten Ausführungsform handelt es sich bei der zentralen Steuereinrichtung der Banknotenbearbeitungsmaschine um einen Industrie-PC bzw. ein entsprechendes Mainboard, auf dem ein PC-Betriebssystem, wie z.B. Windows oder Linux, installiert ist.

Vorzugsweise umfasst die Banknotenbearbeitungsmaschine wenigstens eine Prüfeinrichtung, die Rohdaten und/ oder Messdaten der mit der Banknotenbearbeitungsmaschine bearbeiteten Banknoten erfasst. Dabei stellt das auf dem Anwendungsserver bereitgestellte Softwaremodul vorzugsweise eine Anwendung bereit, die dazu eingerichtet ist, die von der Prüfeinrichtung der Banknotenbearbeitungsmaschine erfassten Rohdaten und/ oder Messdaten zu verarbeiten.

Gemäß einer bevorzugten Ausführungsform enthalten die von der Prüfeinrichtung der Banknotenbearbeitungsmaschine erfassten Rohdaten und/ oder Messdaten die Rohdaten und/oder Messdaten von wenigstens einer als Fälschung bestimmten Banknote. Dabei sind in dem Anwendungsserver, vorzugsweise für jeden Banknotenbearbeitungsmaschinentyp, Konfigurationsdaten hinterlegt, die von der Banknotenbearbeitungsmaschine in Verbindung mit den Rohdaten und/ oder Messdaten einer Banknote dazu verwendet werden können, eine Banknote zu bewerten bzw. zu klassifizieren. Vorzugsweise wird hierzu auf dem Anwendungsserver eine Konfigurationsanwendung ausgeführt, so dass der Anwendungsserver dazu ausgestaltet ist, die darin hinterlegten Konfigurationsdaten, vorzugsweise für jeden Banknotenbearbeitungsmaschinentyp, auf der Grundlage der Rohdaten und/ oder Messdaten, insbesondere der Rohdaten und/ oder Messdaten einer als Fälschung bestimmten Banknote, anzupassen, um die angepassten Konfigurationsdaten Banknotenbearbeitungsmaschinen des entsprechenden Typs zur Verfügung zu stellen. Alternativ oder zusätzlich ist die Konfigurationsanwendung dazu ausgestaltet, auf der Grundlage der Rohdaten und/oder Messdaten, insbesondere der Rohdaten und/ oder Messdaten einer als Fälschung bestimmten Banknote, ein Template einer solchen gefälschten Bank-note zu erzeugen. Ein solches Template kann bei der Bearbeitung weiterer Banknoten dazu verwendet werden, falsche Banknoten zu identifizieren und auszusortieren.

Gemäß der Erfindung enthalten die von der Prüfeinrichtung der Banknotenbearbeitungsmaschine bereitgestellten Rohdaten und/ oder Messdaten Seriennummerndaten der von der Banknotenbearbeitungsmaschine bearbeiteten Banknoten. Gemäß der Erfindung ist der Anwendungsserver aufgrund einer darauf ausgeführten Seriennummernanwendung dazu ausgestaltet, die von einer Banknotenbearbeitungsmaschine bereitgestellten Seriennummerndaten in einem Seriennummernarchiv zu hinterlegen. Bei dieser bevorzugten Ausführungsform ist der Anwendungsserver aufgrund der darauf ausgeführten Seriennummernanwendung vorzugsweise ferner dazu ausgestaltet, anhand der von einer Banknotenbearbeitungsmaschine bereitgestellten Seriennummerndaten und anhand des Seriennummernarchivs den Banknotenumlauf zwischen Banknotenbearbeitungsmaschinen zu kontrollieren, die mit dem Anwendungsserver in Kommunikation stehen. Alternativ oder zusätzlich ist die Seriennummernanwendung vorzugsweise dazu ausgestaltet, im Zusammenhang mit der Seriennummer einer Banknote weitere die Banknote betreffende Daten im Seriennummernarchiv zu hinterlegen, wie beispielsweise der Banknotenwert, die Banknotenbearbeitungsmaschine, mit der diese Banknote bearbeitet worden ist, Datum und Uhrzeit der Bearbeitung, die von der Prüfeinrichtung der Banknotenbearbeitungsmaschine gemessene Intensität eines Sicherheitsmerkmals der Banknote, die Lappigkeit der Banknote, das Vorhandensein eines Klebestreifens auf der Banknote und dergleichen. Diese bevorzugte Ausführungsform erlaubt es, mittels des Seriennummernarchivs beispielsweise Informationen darüber zu sammeln, wie schnell sich eine Banknote und/ oder einzelne Sicherheitsmerkmale einer Banknote abnutzen.

Alternativ oder zusätzlich können die von einer Banknotenbearbeitungsmaschine bereitgestellten Rohdaten und/ oder Messdaten ferner digitale Bilder der von der Banknotenbearbeitungsmaschine bearbeiteten Banknoten umfassen, die mittels einer von dem Anwendungsserver bereitgestellten Anwendung bearbeitet und/oder analysiert werden, um beispielsweise die Seriennummer einer Banknote zu extrahieren. Diese Funktion kann auch in die Seriennummernanwendung integriert sein.

Gemäß einer weiteren bevorzugten Ausführungsform kann auf dem Anwendungsserver ferner eine Reporting-Anwendung ausgeführt werden, so dass dieser dazu ausgestaltet ist, die von einer Banknotenbearbeitungsmaschine bereitgestellten Rohdaten und/ oder Messdaten sowie weitere die Banknotenbearbeitungsmaschine betreffende Daten, wie Betriebsdaten der Banknotenbearbeitungsmaschine oder Abrechnungsdaten, entsprechend aufzubereiten und daraus eine, beispielsweise durch Normen oder Richtlinien vorgeschriebene, Zusammenfassung dieser aufbereiteten Rohdaten und/ oder Messdaten sowie der weiteren die Banknotenbearbeitungsmaschine betreffende Daten in Form eines elektronischen Dokuments, beispielsweise in Form eines Word-Dokuments, PDF-Dokuments und/ oder einer Excel-Datei zu erstellen.

Vorzugsweise stellt der Anwendungsserver zusätzlich oder alternativ eine Wartungsanwendung bereit, so dass dieser dazu ausgestaltet ist, auf der Grundlage der von einer Banknotenbearbeitungsmaschine bereitgestellten Rohdaten und/ oder Messdaten den Wartungsbedarf der Banknotenbearbeitungsmaschine zu bestimmen und zu kontrollieren. Die auf dem Anwendungsserver ausgeführte Wartungsanwendung kann beispielsweise den Wartungsbedarf einer Banknotenbearbeitungsmaschine dadurch bestimmen, dass die Messdaten einer Banknotenbearbeitungsmaschine mit den Rohdaten und/ oder Messdaten von Banknotenbearbeitungsmaschinen des gleichen Typs verglichen werden. Wird bei diesem Vergleich ein Leistungsabfall einer Banknotenbearbeitungsmaschine festgestellt, kann die auf dem Anwendungsserver ausgeführte Wartungsanwendung eine Wartung dieser Banknotenbearbeitungsmaschine veranlassen. Alternativ oder zusätzlich kann die auf dem Anwendungsserver ausgeführte Wartungsanwendung auf der Grundlage der von einer Banknotenbearbeitungsmaschine bereitgestellten Rohdaten und/oder Messdaten die Wartung dieser Banknotenbearbeitungsmaschine veranlassen, wenn beispielsweise die Rohdaten und/oder Messdaten anzeigen, dass eine Banknotenbearbeitungsmaschine eine Anzahl von Banknoten bearbeitet hat, die größer als ein definierbarer Schwellenwert ist.

Gemäß einer bevorzugten Ausführungsform kann es sich bei dem externen Kommunikationsnetzwerk um das Internet, um ein nicht-öffentliches Kommunikationsnetzwerk, z.B. um ein Kommunikationsnetzwerk eines Unternehmens, oder um eine Kombination davon handeln.

Vorzugsweise sind auf einer jeweiligen Banknotenbearbeitungsmaschine und/ oder dem Anwendungsserver elektronische Schlüssel hinterlegt, mittels derer die Übertragung von Daten zwischen einer Banknotenbearbeitungsmaschine und dem Anwendungsserver verschlüsselt werden kann und/ oder zwischen einer Banknotenbearbeitungsmaschine und dem Anwendungsserver vorzugsweise ein gegenseitiger Authentisierungsvorgang durchgeführt werden kann, bevor die Banknotenbearbeitungsmaschine auf Anwendungen zugreifen kann, die auf dem Anwendungsserver implementiert sind, und/oder die Banknotenbearbeitungsmaschine Rohdaten und/oder Messdaten an den Anwendungsserver zur Weiterverarbeitung weiterleiten kann. Vorzugsweise handelt es sich bei dem Authentisierungsvorgang um eine Challenge-Response-Authentisierung.

Der Fachmann wird erkennen, dass die vorstehend beschriebenen bevorzugten Ausgestaltungen sich sowohl im Rahmen des ersten Aspekts der Erfindung, d.h. im Rahmen des Systems zum Bearbeiten von Banknoten, als auch im Rahmen des zweiten Aspekts der Erfindung, d.h. im Rahmen des Verfahrens zum Bearbeiten von Banknoten, vorteilhaft implementieren lassen.

Die Erfindung bietet unter anderem die folgenden Vorteile. Der Betreiber einer Banknotenbearbeitungsmaschine kann unabhängig von der Hardwareausstattung seiner Banknotenbearbeitungsmaschine auf neue optionale Dienste bzw. Anwendungen zugreifen. Dabei können auch hardwareintensive Dienste bzw. Anwendungen den Standardbetrieb von Banknotenbearbeitungsmaschinen erweitern, die eigentlich für solche Dienste bzw. Anwendungen nicht ausgestaltet sind.

Weitere Merkmale, Vorteile und Aufgaben der Erfindung gehen aus der folgenden detaillierten Beschreibung mehrerer Ausführungsbeispiele und Ausführungsalternativen hervor. Es wird auf die Zeichnungen verwiesen, in denen zeigen:
- Fig. 1: eine schematische Darstellung einer bevorzugten Ausführungsform eines Systems zur Bearbeitung von Banknoten, und
- Fig. 2: eine schematische Detailansicht einer Banknotenbearbeitungsmaschine des Systems zur Bearbeitung von Banknoten von Figur 1.

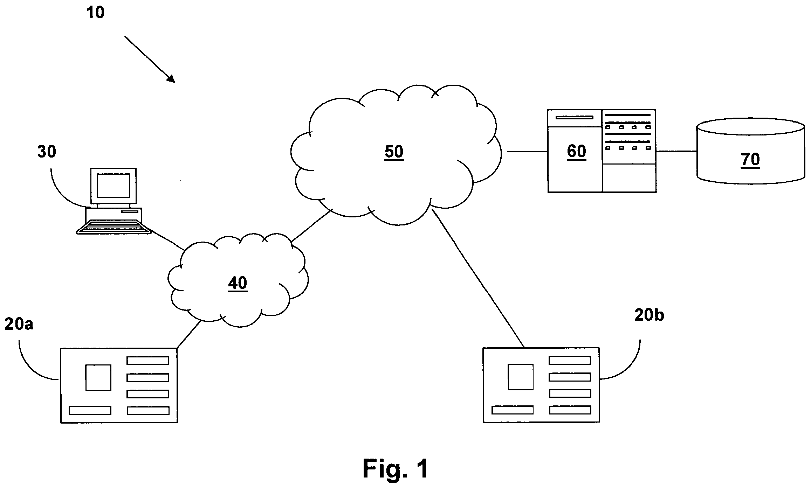

Fig. 1 zeigt eine schematische Darstellung eines Systems 10 zur Bearbeitung von Banknoten gemäß einer bevorzugten Ausführungsform der Erfindung. Das System 10 umfasst eine erste Banknotenbearbeitungsmaschine 20a sowie eine zweite Banknotenbearbeitungsmaschine 20b, die insbesondere dazu ausgestaltet sind, Banknoten zu zählen, zu prüfen und/ oder zu sortieren. Die Banknotenbearbeitungsmaschine 20a ist Teil eines lokalen Netzwerkes (local area network; LAN) 40. Ein Client-Terminal 30 ist ebenfalls mit dem LAN 40 verbunden, der dazu ausgestaltet mit der Banknotenbearbeitungsmaschine 20a zu kommunizieren.

Die Banknotenbearbeitungsmaschine 20a und das Client-Terminal 30 sind über das LAN 40 mit einem externen Kommunikationsnetzwerk 50, vorzugsweise dem Internet, verbunden. Die Banknotenbearbeitungsmaschine 20b ist direkt mit dem externen Kommunikationsnetzwerk 50 verbunden.

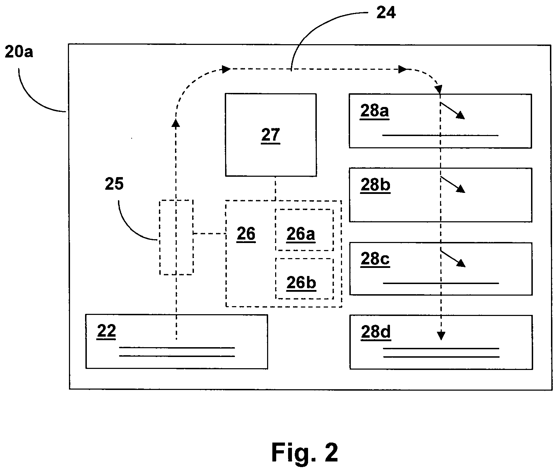

Figur 2 zeigt eine Detailansicht der Banknotenbearbeitungsmaschine 20a, die baugleich zu der Banknotenbearbeitungsmaschine 20b sein kann, jedoch nicht sein muss. An der Front- bzw. Vorderseite weist die Banknotenbearbeitungsmaschine 20a ein Eingabefach 22 auf, in das ein Stapel von Banknoten zur Bearbeitung durch die Banknotenbearbeitungsmaschine 20a eingelegt werden kann, wie dies in Figur 2 schematisch angedeutet ist. Bei der in Figur 2 dargestellten bevorzugten Ausführungsform werden die Banknoten mit ihrer langen Seite bzw. Längsseite einer vor der Banknotenbearbeitungsmaschine 20a sitzenden bzw. stehenden Bedienperson zugewandt in das Eingabefach 22 eingelegt. Aus dem Eingabefach 22 werden die Banknoten mittels einer geeigneten Vereinzelungseinrichtung vereinzelt und einem ersten Abschnitt eines sich anschließenden Transportsystems 24 der Banknotenbearbeitungsmaschine 20a überführt, das die vereinzelten Banknoten einer Prüfeinrichtung 25 zuführt. Wie dies dem Fachmann bekannt ist, kann das Transportsystem 24 der Banknotenbearbeitungsmaschine 20a beispielsweise mittels einer Vielzahl von Führungs- bzw. Umlenkelementen und durch Riemen angetriebene Antriebsrollen verwirklicht sein. Mittels der Prüfeinrichtung 25 können wählbare Kriterien einer durch die Prüfeinrichtung 25 hindurch bewegten Banknote überprüft werden. Abhängig von dieser Prüfung werden die Banknoten im weiteren Verlauf des Transportsystems 24 der Banknotenbearbeitungsmaschine 20a vorzugsweise durch die geeignete Ansteuerung einer Vielzahl von Weicheneinrichtungen einem der Ausgabefächer 28a-d zugeführt. Vorzugsweise umfasst die Banknotenbearbeitungsmaschine 20a ferner eine Benutzerschnittstelle in Form eines Touchscreens 27, auf dem einem Benutzer Informationen z.B. über den Zustand der Banknotenbearbeitungsmaschine 20a angezeigt werden können und/ oder der Benutzer Eingaben beispielsweise zur Steuerung der Banknotenbearbeitungsmaschine 20a vornehmen kann.

Im Einzelnen arbeitet die in Figur 2 dargestellte Banknotenbearbeitungsmaschine 20a wie folgt. Die in das Eingabefach 22 eingelegten Banknoten werden mittels der Vereinzelungseinrichtung Banknote für Banknote hintereinander dem Transportsystem 24 der Banknotenbearbeitungsmaschine 20a zugeführt. Das Transportsystem 24 transportiert die Banknoten und führt sie durch die Prüfeinrichtung 25, die dazu ausgestaltet ist, Rohdaten und/ oder Messdaten (d.h. bereits weiterverarbeitete Messdaten) hinsichtlich wenigstens einer physikalischen (z.B. optischen) Eigenschaft einer durch die Prüfeinrichtung 25 hindurch geführten Banknote zu bestimmen. Die so bestimmten Rohdaten und/ oder Messdaten der Banknote werden von einer mit der Prüfeinrichtung 25 verbundenen zentralen Steuereinrichtung 26 der Banknotenbearbeitungsmaschine 20a dazu verwendet, die Banknote einer bestimmten Klasse zuzuordnen und entsprechend dieser Klassifizierung einem der Ausgabefächer 28a-d zuzuführen. Bei den möglichen Klassen, aus welchen eine ausgewählt werden kann, handelt es sich beispielsweise um die Denominationen der verschiedenen Banknoten. Mögliche Klassen können dann beispielsweise für 5, 10, 20, 50, 100, 200 und 500 Euro-Scheine vorgesehen sein. Im Allgemeinen kann die Ermittlung einer Klasse aber auch im Hinblick auf die Echtheit und/ oder Fitness, d. h. die Tauglichkeit der Bank-note für eine Wiederverwendung, erfolgen. Die einzelnen möglichen Klassen spiegeln dann beispielsweise unterschiedliche Echtheits- bzw. Fitnessgrade der Banknoten wider, wie beispielsweise "echt", "verkehrsfähig", "zu vernichten" und dergleichen. Vorzugsweise handelt es sich bei der Prüfeinrichtung 25 um eine Einrichtung mit geeigneten Lichtquellen und optischen Sensoren zur Messung optischer Eigenschaften, z.B. das Absorptions- und/oder Reflexionsverhalten, einer Banknote in einem oder mehreren ausgewählten Wellenlängenbereichen und damit zur Erzeugung von Rohdaten und/ oder Messdaten einer jeweiligen Banknote.

Bei der in Figur 2 dargestellten bevorzugten Ausführungsform umfasst die zentrale Steuereinrichtung 26 eine Prozessoreinheit 26a und eine Speichereinheit 26b. Bei der zentralen Steuereinrichtung 26 kann es sich gemäß einer bevorzugten Ausführungsform der Erfindung um einen Industrie-PC oder ein entsprechendes Mainboard handeln. Auf der Speichereinheit 26b der zentralen Steuereinrichtung 26, bei der es sich z.B. um einen nichtflüchtigen Speicher in Form eines Festplatten-Speichers oder eines Flash-Speichers handeln kann, ist vorzugsweise ein bekanntes PC-Betriebssystem, z.B. Windows oder Linux, implementiert.

Vorzugsweise sind auf der Speichereinheit 26b der zentralen Steuereinrichtung 26 neben einem Betriebssystem lediglich die Softwaremodule hinterlegt, die zum Standardbetrieb der Banknotenbearbeitungsmaschine 20a notwendig sind. Vorzugsweise sind auf der Speichereinheit 26b ein Benutzerschnittstellensoftwaremodul, d.h. ein Softwaremodul zur Steuerung der Benutzerschnittstelle 27 in Form eines Touchscreens, ein Transportsystemsoftwaremodul, d.h. ein Softwaremodul zur koordinierten Ansteuerung der das Transportsystem 24 ausbildenden Komponenten, und ein Prüfeinrichtungssoftwaremodul, d.h. ein Softwaremodul zum Betreiben der Prüfeinrichtung 25, hinterlegt. Wie der Fachmann erkennen wird, können diese Funktionen, die zum Betrieb der Banknotenbearbeitungsmaschine notwendig sind, im Prinzip von einem einzelnen Softwaremodul bereitgestellt werden, d.h. das Benutzerschnittstellensoftwaremodul, das Transportsystemsoftwaremodul und das Prüfeinrichtungssoftwaremodul können auch zu einem einzigen Steuerungssoftwaremodul zusammengefasst werden. Gemäß einer weiteren erfindungsgemäßen Variante ist es vorstellbar, dass die Prüfeinrichtung 25 selber eine Prozessoreinheit aufweist, auf der ein Prüfeinrichtungssoftwaremodul implementiert ist. In diesem Fall ist auf der Speichereinheit 26b der zentralen Steuereinrichtung 26 vorzugsweise ein Softwaremodul installiert, das mit dem auf der Prüfeinrichtung 25 implementierten Prüfeinrichtungssoftwaremodul geeignet zusammenwirkt.

Wie sich dies wiederum der Figur 1 entnehmen lässt, sind sowohl die Banknotenbearbeitungsmaschine 20a als auch die Banknotenbearbeitungsmaschine 20b über das externe Kommunikationsnetzwerk 50 (vorzugsweise das Internet) mit einem Anwendungsserver 60 verbunden, auf dem vorzugsweise weitere Softwaremodule implementiert sind, die jeweils eine optionale Anwendung bereitstellen, die zum Betrieb der Banknotenbearbeitungsmaschine 20a bzw. 20b nicht unbedingt notwendig sind, sondern zusätzliche optionale Services bzw. Funktionen bereitstellen, die ein Benutzer zusätzlich zu den Anwendungen des Standardbetriebs der Banknotenbearbeitungsmaschine 20a bzw. 20b einsetzen kann. Diese zusätzlichen Anwendungen, die bei herkömmlichen Banknotenbearbeitungsmaschinen von der Prozessoreinheit einer solchen Banknotenbearbeitungsmaschine bereitgestellt werden müssen, werden somit erfindungsgemäß auf den Anwendungsserver 60 ausgelagert. Der Anwendungsserver 60, der mit einer Datenbank 70 verbunden sein kann, stellt somit über das externe Kommunikationsnetzwerk 50 der in diesem Fall als Client agierenden Banknotenbearbeitungsmaschine 20a bzw. 20b insbesondere Rechenkapazität, Datenspeicher und durch Softwaremodule bereitgestellte optionale Anwendungen zur Verfügung, und zwar in einer Form, die an den Bedarf der Banknotenbearbeitungsmaschine 20a bzw. 20b angepasst werden kann. Erfindungsgemäß ist es beispielweise denkbar, dass der Betreiber der Banknotenbearbeitungsmaschine 20a bzw. 20b bei dem Betreiber des Anwendungsservers 60 eine maximale Rechenkapazität, eine maximale Datenspeichergröße, ausgewählte Softwaremodule und/ oder eine maximale Anzahl von Anwendungsinstanzen mietet oder für diese bezahlt, die je nach Bedarf des Betreibers der Banknotenbearbeitungsmaschine 20a bzw. 20b manuell oder voll automatisch angepasst werden können.

Gemäß einer bevorzugten Ausführungsform der Erfindung wird auf dem Anwendungsserver 60 eine Konfigurationsanwendung (auch Adaptionsanwendung genannt) ausgeführt, die durch ein entsprechendes auf dem Anwendungsserver bereitgestelltes optionales Softwaremodul bereitgestellt wird und für den Standardbetrieb der Banknotenbearbeitungsmaschine 20a oder 20b nicht notwendig ist. Mittels der darauf ausgeführten Konfigurationsanwendung ist der Anwendungsserver 60 dazu ausgestaltet, die Rohdaten und/ oder Messdaten der Prüfeinrichtung 25 der Banknotenbearbeitungsmaschine 20a (oder der Banknotenbearbeitungsmaschine 20b) zu analysieren und in Abhängigkeit dieser Analyse der Rohdaten und/ oder Messdaten ggf. einen auf dem Anwendungsserver 60 oder der mit diesem verbundenen Datenbank 70 hinterlegten Konfigurationsdatensatz anzupassen. Dabei ist vorzugsweise für jeden Banknotenbearbeitungsmaschinentyp ein eigener Konfigurationsdatensatz auf dem Anwendungsserver 60 oder der mit diesem verbundenen Datenbank 70 hinterlegt. Der Konfigurationsdatensatz für einen bestimmten Banknotenbearbeitungsmaschinentyp kann für die von der Prüfeinrichtung 25 gemessen physikalischen Eigenschaften einer Banknote jeweilige Wertebereiche definieren, in welche jeweils gemessene Eigenschaften einer Banknote fallen müssen, damit diese einer bestimmten Klasse zugewiesen werden kann, z.B. einem bestimmten Wert, "echt"/"falsch" und dergleichen.

Aufgrund der darauf ausgeführten Konfigurationsanwendung ist der Anwendungsserver 60 dazu ausgestaltet, insbesondere dann eine Anpassung des Konfigurationsdatensatzes vorzunehmen, wenn bestimmt worden ist, dass die von der Banknotenbearbeitungsmaschine 20a oder 20b bereitgestellten Rohdaten und/oder Messdaten auf einer als Fälschung erkannten Bank-note basieren. Diese Erkennung einer falschen Banknote anhand der Rohdaten und/ oder Messdaten kann durch die auf dem Anwendungsserver 60 bereitgestellte Konfigurationsanwendung und/ oder durch die zentrale Steuereinrichtung 26 der Banknotenbearbeitungsmaschine 20a erfolgen.

Es ist beispielsweise denkbar, dass bei einer (aufgrund von anderen gemessenen Eigenschaften) als falsch erkannten Banknote eine Eigenschaft gemessen wird, deren Wert innerhalb eines Wertebereichs des Konfigurationsdatensatzes liegt, in dem eine Banknote als echt gilt. In diesem Fall ist der Anwendungsserver 60 aufgrund der darauf ausgeführten Konfigurationsanwendung dazu ausgestaltet, die Grenzen dieses Wertebereichs derart neu zu bestimmen, dass auch der für die eine Eigenschaft der falschen Banknote gemessene Wert, der bisher innerhalb dieses Wertebereichs lag, von dem neu bestimmten Wertebereich nicht mehr umfasst wird. Alternativ oder zusätzlich kann die Konfigurationsanwendung dazu ausgestaltet sein, auf der Grundlage der Rohdaten und/oder Messdaten einer als Fälschung bestimmten Banknote, ein Template einer solchen gefälschten Banknote zu erzeugen. Ein solches Template kann bei der Bearbeitung weiterer Banknoten dazu verwendet werden, falsche Banknoten zu identifizieren und auszusortieren.

Nachdem eine solche Anpassung eines Konfigurationsdatensatzes für einen bestimmten Banknotenbearbeitungsmaschinentyp mittels der Konfigurationsanwendung auf dem Anwendungsserver 60 durchgeführt worden ist, kann der angepasste Konfigurationsdatensatz vom Anwendungsserver 60 in der Datenbank 70 hinterlegt werden, einer bestimmten Banknotenbearbeitungsmaschine (z.B. der Banknotenbearbeitungsmaschine 20a oder 20b) und/ oder allen Banknotenbearbeitungsmaschinen eines bestimmten Typs zur Verfügung gestellt werden.

Gemäß einer bevorzugten Ausführungsform der Erfindung wird auf dem Anwendungsserver 60 zusätzlich oder alternativ eine Seriennummernanwendung ausgeführt, die durch ein entsprechendes auf dem Anwendungsserver 60 bereitgestelltes optionales Softwaremodul bereitgestellt wird und für den Standardbetrieb der Banknotenbearbeitungsmaschine 20a oder 20b nicht notwendig ist. Mittels der darauf ausgeführten Seriennummernanwendung ist der Anwendungsserver 60 dazu ausgestaltet, die Rohdaten und/ oder Messdaten der Prüfeinrichtung 25 der Banknotenbearbeitungsmaschine 20a (sowie die Rohdaten und/oder Messdaten der Prüfeinrichtungen der weiteren mit dem Anwendungsserver 60 verbundenen Banknotenbearbeitungsmaschinen) zu analysieren und daraus die Seriennummern der bearbeiteten Banknoten zu extrahieren. Für den Fall, dass die von der Banknotenbearbeitungsmaschine 20a bereitgestellten Rohdaten und/oder Messdaten Bilddaten einer jeweiligen Banknote enthalten, ist der Anwendungsserver 60 mittels der darauf ausgeführten Seriennummernanwendung vorzugsweise dazu ausgestaltet, die Seriennummer einer jeweiligen Banknoten aus den entsprechenden Bilddaten zu extrahieren.

Vorzugsweise ist der Anwendungsserver 60 mittels der darauf ausgeführten Seriennummernanwendung dazu ausgestaltet, vorzugsweise auf der Datenbank 70 ein Seriennummernarchiv zu pflegen, in dem neue Seriennummern hinterlegt und bereits eingetragene Seriennummern wieder aufgefunden werden können. In dem Seriennummernarchiv wird die für eine Banknote bestimmte Seriennummer vorzugsweise zusammen mit weiteren die Bank-note betreffenden Daten hinterlegt, wie z.B. der Banknotenwert, die Banknotenbearbeitungsmaschine, mit der diese Banknote bearbeitet worden ist, Datum und Uhrzeit der Bearbeitung, die von der Prüfeinrichtung der Banknotenbearbeitungsmaschine gemessene Intensität eines Sicherheitsmerkmals der Banknote, die Lappigkeit der Banknote, das Vorhandensein eines Klebestreifens auf der Banknote und dergleichen. Mittels dieser im Seriennummernarchiv hinterlegten Daten ist der Anwendungsserver 60 dazu in der Lage, den Banknotenumlauf insbesondere zwischen den Banknotenbearbeitungsmaschinen zu kontrollieren, die mit dem Anwendungsserver 60 in Kommunikation stehen. Ferner ist der Anwendungsserver 60 aufgrund der darauf ausgeführten Seriennummernanwendung dazu in der Lage, anhand des zentralen Seriennummernarchivs Falschgeld leichter zu erkennen oder markierte Banknoten, deren Seriennummern bekannt sind, wieder aufzufinden. Schließlich ist der Anwendungsserver 60 aufgrund der darauf ausgeführten Seriennummernanwendung dazu in der Lage, anhand des zentralen Seriennummernarchivs Informationen darüber zu sammeln, wie schnell sich eine Banknote und/ oder einzelne Sicherheitsmerkmale einer Banknote abnutzen.

Gemäß einer bevorzugten Ausführungsform der Erfindung wird auf dem Anwendungsserver 60 zusätzlich oder alternativ eine Reporting-Anwendung ausgeführt, die durch ein entsprechendes auf dem Anwendungsserver 60 bereitgestelltes optionales Softwaremodul bereitgestellt wird und für den Standardbetrieb der Banknotenbearbeitungsmaschine 20a oder 20b nicht notwendig ist. Mittels der darauf ausgeführten Reporting-Anwendung ist der Anwendungsserver 60 dazu ausgestaltet, die von einer Banknotenbearbeitungsmaschine bereitgestellten Rohdaten und/ oder Messdaten sowie weitere die Banknotenbearbeitungsmaschine betreffende Daten, wie Betriebsdaten der Banknotenbearbeitungsmaschine oder Abrechnungsdaten, entsprechend aufzubereiten und automatisch ein elektronisches Dokument in einer vom Benutzer der Banknotenbearbeitungsmaschine definierbaren Form, beispielsweise in Form eines Word-Dokuments, PDF-Dokuments und/ oder einer Excel-Datei, zu erstellen. Das Erstellen derartiger elektronischer Dokumente in einer bestimmten Form kann beim Betrieb einer Banknotenbearbeitungsmaschine beispielweise durch gesetzliche Vorgaben vorgeschrieben sein.

Gemäß einer bevorzugten Ausführungsform der Erfindung wird auf dem Anwendungsserver 60 zusätzlich oder alternativ eine Wartungsanwendung ausgeführt, die durch ein entsprechendes auf dem Anwendungsserver 60 bereitgestelltes optionales Softwaremodul bereitgestellt wird und für den Standardbetrieb der Banknotenbearbeitungsmaschine 20a oder 20b nicht notwendig ist. Mittels der darauf ausgeführten Wartungsanwendung ist der Anwendungsserver 60 dazu ausgestaltet, auf der Grundlage der von einer Banknotenbearbeitungsmaschine 20a, 20b bereitgestellten Rohdaten und/oder Messdaten den Wartungsbedarf der Banknotenbearbeitungsmaschine 20a, 20b zu bestimmen und zu kontrollieren. Die auf dem Anwendungsserver 60 ausgeführte Wartungsanwendung kann beispielsweise den Wartungsbedarf einer Banknotenbearbeitungsmaschine 20a, 20b dadurch bestimmen, dass die Rohdaten und/ oder Messdaten einer Banknotenbearbeitungsmaschine 20a, 20b mit den Rohdaten und/ oder Messdaten von Banknotenbearbeitungsmaschinen des gleichen Typs verglichen werden. Wird bei diesem Vergleich ein Leistungsabfall der Banknotenbearbeitungsmaschine 20a, 20b festgestellt, kann die auf dem Anwendungsserver 60 ausgeführte Wartungsanwendung eine Wartung dieser Banknotenbearbeitungsmaschine 20a, 20b veranlassen. Alternativ oder zusätzlich kann die auf dem Anwendungsserver 60 bereitgestellte Wartungsanwendung auf der Grundlage der von einer Banknotenbearbeitungsmaschine 20a, 20b bereitgestellten Rohdaten und/ oder Messdaten die Wartung dieser Banknotenbearbeitungsmaschine 20a, 20b veranlassen, wenn beispielsweise die Rohdaten und/ der Messdaten anzeigen, dass die Banknotenbearbeitungsmaschine 20a, 20b eine Anzahl von Banknoten bearbeitet hat, die größer als ein definierbarer Schwellenwert ist. Bei dieser bevorzugten Ausführungsform umfassen die von einer Banknotenbearbeitungsmaschine bereitgestellten Rohdaten und/oder Messdaten vorzugsweise ferner Informationen über in der Banknotenbearbeitungsmaschine auftretende Fehlerfälle, wie z.B. die Fehlfunktion einer Komponente der Banknotenbearbeitungsmaschine, die Ausbildung eines Banknotenstaus an einer bestimmten Stelle der Banknotenbearbeitungsmaschine und dergleichen. Vorzugsweise ist der Anwendungsserver 60 aufgrund der darauf ausgeführten Wartungsanwendung dazu ausgestaltet, aufgrund der Informationen über Fehlerfälle, die bei Banknotenbearbeitungsmaschinen eines bestimmten Typs beispielsweise im Durchschnitt nach der Bearbeitung einer bestimmten Zahl von Banknoten auftreten, die Wartung einer Banknotenbearbeitungsmaschine dieses Typs zu veranlassen, bei der dieser Fehlerfall bisher nicht aufgetreten ist.

Obgleich vorstehend beschrieben worden ist, dass es sich bei dem externen Kommunikationsnetzwerk 50 vorzugsweise um das Internet handelt, wird der Fachmann erkennen, dass sich die vorliegende Erfindung auch mittels anderer Kommunikationsnetzwerke vorteilhaft implementieren lässt. Dem entsprechend kann es sich bei dem Kommunikationsnetzwerk 50 auch um ein nicht-öffentliches Kommunikationsnetzwerk, z.B. um ein Kommunikationsnetzwerk eines Unternehmens handeln. Erfindungsgemäß sind ebenfalls Hybridlösungen vorstellbar, bei denen z.B. ein Unternehmen erfindungsgemäß eine Vielzahl von Banknotenbearbeitungsmaschinen und einen Anwendungsserver über ein nicht-öffentliches Kommunikationsnetzwerk betreibt, jedoch bei Bedarf auf einen über das Internet erreichbaren weiteren Anwendungsserver zugreifen kann, um beispielsweise Belastungsspitzen aufzufangen.

Gemäß einer bevorzugten Ausführungsform sind insbesondere für den Fall, dass es sich bei dem Kommunikationsnetzwerk zumindest teilweise um das öffentlich zugängliche Internet handelt, auf einer jeweiligen Banknotenbearbeitungsmaschine 20a, 20b und/ oder dem Anwendungsserver 60 elektronische Schlüssel zur gegenseitigen Authentisierung und/ oder Verschlüsselung der Datenübertragung zwischen einer Banknotenbearbeitungsmaschine 20a, 20b und dem Anwendungsserver 60 hinterlegt. Bevor die Banknotenbearbeitungsmaschine 20a, 20b auf die auf dem Anwendungsserver 60 ausgeführten optionalen Anwendungen zugreifen kann und/ oder die Banknotenbearbeitungsmaschine 20a, 20b Rohdaten und/ oder Messdaten an den Anwendungsserver 60 zur Weiterverarbeitung durch die darauf ausgeführten Anwendungen weiterleiten kann, muss vorzugsweise zunächst eine Challenge-Response-Authentisierung zwischen der Banknotenbearbeitungsmaschine 20a, 20b und dem Anwendungsserver 60 erfolgreich durchgeführt werden. Bei der optionalen Verschlüsselung der Datenübertragung zwischen einer jeweiligen Banknotenbearbeitungsmaschine 20a, 20b und/ oder dem Anwendungsserver 60 können dem Fachmann bekannte symmetrische oder asymmetrische Verschlüsselungsverfahren oder Hybridverfahren eingesetzt werden.

Der Fachmann wird erkennen, dass die Funktionen des vorstehend beschriebenen Anwendungsservers 60 auch von einer Vielzahl von Anwendungsservern, beispielsweise von einer Server-Farm, übernommen werden kann, die über das Kommunikationsnetzwerk 50 mit den Banknotenbearbeitungsmaschinen 20a, 20b in Kommunikation stehen. Dabei können die vorstehend beschriebenen Anwendungen bzw. Softwaremodule, die optional für den Betrieb der Banknotenbearbeitungsmaschinen 20a, 20b sind, auf unterschiedlichen Anwendungsservern implementiert sein bzw. ausgeführt werden.

## Patentansprüche

1. System (10) zur Bearbeitung von Wertdokumenten, insbesondere Banknoten, wobei das System (10) umfasst:
wenigstens eine Banknotenbearbeitungsmaschine (20a, 20b) mit einer zentralen Steuereinrichtung (26), auf der Softwaremodule implementiert sind, die zum Standardbetrieb der Banknotenbearbeitungsmaschine (20a, 20b) notwendig sind; und
einen Anwendungsserver (60), der mit der Banknotenbearbeitungsmaschine (20a, 20b) über ein Kommunikationsnetzwerk (50) in Verbindung steht und auf dem wenigstens ein weiteres Softwaremodul mit optionalen Anwendungen implementiert ist, das auf dem Anwendungsserver ausgeführt wird und der Banknotenbearbeitungsmaschine (20a, 20b) eine Anwendung bereitstellt, die zumindest eine über den Standardbetrieb der Banknotenbearbeitungsmaschine hinausgehende Funktion bereitstellt,
wobei die Banknotenbearbeitungsmaschine (20a, 20b) wenigstens eine Prüfeinrichtung (25) umfasst, die Rohdaten und/oder Messdaten der mit der Banknotenbearbeitungsmaschine (20a, 20b) bearbeiteten Banknoten erfasst, wobei das auf dem Anwendungsserver (60) implementierte Softwaremodul eine Anwendung bereitstellt, die dazu eingerichtet ist, die von der Prüfeinrichtung (25) der Banknotenbearbeitungsmaschine (20a, 20b) erfassten Rohdaten und/ oder Messdaten zu verarbeiten,
**dadurch gekennzeichnet, dass**
die von der Prüfeinrichtung (25) der Banknotenbearbeitungsmaschine (20a, 20b) bereitgestellten Rohdaten und/ oder Messdaten Seriennummerndaten der von der Banknotenbearbeitungsmaschine (20a, 20b) bearbeiteten Banknoten umfassen, wobei der Anwendungsserver (60) aufgrund einer darauf ausgeführten Seriennummernanwendung dazu ausgestaltet ist, die von einer Banknotenbearbeitungsmaschine (20a, 20b) bereitgestellten Seriennummerndaten in einem Seriennummernarchiv zu hinterlegen und anhand der von einer Banknotenbearbeitungsmaschine (20a, 20b) bereitgestellten Seriennummerndaten sowie anhand des Seriennummernarchivs den Fluss von Banknoten zwischen den Banknotenbearbeitungsmaschinen (20a, 20b) zu kontrollieren, die mit dem Anwendungsserver (60) in Kommunikation stehen.

2. System (10) nach Anspruch 1, wobei es sich bei der zentralen Steuereinrichtung (26) der Banknotenbearbeitungsmaschine (20a) um einen Industrie-PC bzw. ein entsprechendes Mainboard handelt, auf dem vorzugsweise ein PC-Betriebssystem, wie z.B. Windows oder Linux, installiert ist.

3. System (10) nach Anspruch 1, wobei in dem Anwendungsserver (60), vorzugsweise für jeden Banknotenbearbeitungsmaschinentyp, Konfigurationsdaten hinterlegt sind, die von der Banknotenbearbeitungsmaschine (20a, 20b) in Verbindung mit den Rohdaten und/ oder Messdaten einer Banknote dazu verwendet werden können, eine Banknote zu bewerten bzw. zu klassifizieren, und wobei auf dem Anwendungsserver (60) eine Konfigurationsanwendung ausgeführt wird, so dass der Anwendungsserver (60) dazu ausgestaltet ist, die darin hinterlegten Konfigurationsdaten, vorzugsweise für jeden Banknotenbearbeitungsmaschinentyp, auf der Grundlage der Rohdaten und/oder Messdaten anzupassen, um die angepassten Konfigurationsdaten Banknotenbearbeitungsmaschinen (20a, 20b) des entsprechenden Typs zur Verfügung zu stellen.

4. System (10) nach Anspruch 1, wobei die aufgrund der darauf ausgeführten Seriennummernanwendung der Anwendungsserver (60) dazu ausgestaltet ist, die Seriennummer einer Banknote aus den Bilddaten einer Banknote zu extrahieren, die Teil der von der Banknotenbearbeitungsmaschine (20a, 20b) bereitgestellten Rohdaten und/ oder Messdaten sind.

5. System (10) nach Anspruch 1, wobei auf dem Anwendungsserver (60) eine Reporting-Anwendung ausgeführt wird, so dass dieser dazu ausgestaltet ist, die von einer Banknotenbearbeitungsmaschine (20a, 20b) bereitgestellten Rohdaten und/ oder Messdaten entsprechend aufzubereiten und daraus einen Bericht in einer definierbaren Form zu erstellen.

6. System (10) nach Anspruch 1, wobei auf dem Anwendungsserver (60) eine Wartungsanwendung ausgeführt wird, so dass dieser dazu ausgestaltet ist, auf der Grundlage der von einer Banknotenbearbeitungsmaschine (20a, 20b) bereitgestellten Rohdaten und/oder Messdaten den Wartungsbedarf der Banknotenbearbeitungsmaschine (20a, 20b) zu bestimmen und zu kontrollieren.

7. System (10) nach einem der vorhergehenden Ansprüche, wobei auf der Banknotenbearbeitungsmaschine (20a, 20b) und/ oder dem Anwendungsserver (60) elektronische Schlüssel hinterlegt sind, mittels derer die Übertragung von Daten zwischen der Banknotenbearbeitungsmaschine (20a, 20b) und dem Anwendungsserver verschlüsselt werden kann und/oder zwischen der Banknotenbearbeitungsmaschine (20a, 20b) und dem Anwendungsserver (60) ein Authentisierungsvorgang durchgeführt werden kann, wobei es sich bei dem Authentisierungsvorgang vorzugsweise um eine gegenseitige Challenge-Response-Authentisierung handelt.

8. Verfahren zum Bearbeiten von Wertdokumenten, insbesondere Banknoten, wobei das Verfahren die folgenden Schritte umfasst:
Ausführen von Softwaremodulen auf einer Banknotenbearbeitungsmaschine (20a, 20b), die für den Standardbetrieb der Banknotenbearbeitungsmaschine (20a, 20b) erforderlich sind; und
Ausführen wenigstens eines weiteren Softwaremoduls mit optionalen Anwendungen auf einem Anwendungsserver (60), der über ein Kommunikationsnetzwerk (50) mit der Banknotenbearbeitungsmaschine (20a, 20b) kommunizieren kann, wobei das wenigstens eine weitere Softwaremodul eine Anwendung bereitstellt, die zumindest eine über den Standardbetrieb der Banknotenbearbeitungsmaschine hinausgehende Funktion bereitstellt,
Erfassen von Rohdaten und/oder Messdaten der mit der Banknotenbearbeitungsmaschine (20a, 20b) bearbeiteten Banknoten durch eine Prüfeinrichtung (25) der Banknotenbearbeitungsmaschine (20a, 20b),
Verarbeiten der von der Prüfeinrichtung (25) der Banknotenbearbeitungsmaschine (20a, 20b) erfassten Rohdaten und/ oder Messdaten durch eine Anwendung des auf dem Anwendungsserver (60) implementierten Softwaremoduls,
**dadurch gekennzeichnet, dass**
die von der Prüfeinrichtung (25) der Banknotenbearbeitungsmaschine (20a, 20b) bereitgestellten Rohdaten und/ oder Messdaten mit Seriennummerndaten der von der Banknotenbearbeitungsmaschine (20a, 20b) bearbeiteten Banknoten bereitgestellt werden, wobei die von einer Banknotenbearbeitungsmaschine (20a, 20b) bereitgestellten Seriennummerndaten durch eine auf dem Anwendungsserver (60) ausgeführte Seriennummernanwendung in ein Seriennummernarchiv hinterlegt werden und anhand der von einer Banknotenbearbeitungsmaschine (20a, 20b) bereitgestellten Seriennummerndaten sowie anhand des Seriennummernarchivs der Fluss von Banknoten zwischen den Banknotenbearbeitungsmaschinen (20a, 20b), die mit dem Anwendungsserver (60) in Kommunikation stehen, kontrolliert wird.

## Claims

1. A system (10) for processing value documents, in particular bank notes, wherein the system (10) comprises:
at least one bank-note processing machine (20a, 20b) having a central control device (26) on which there are implemented software modules which are necessary for the standard operation of the bank-note processing machine (20a, 20b); and
an application server (60) which is connected to the bank-note processing machine (20a, 20b) via a communication network (50) and on which there is implemented at least one further software module with optional applications which is executed on the application server and provides to the bank-note processing machine (20a, 20b) an application which provides at least one function going beyond the standard operation of the bank-note processing machine,
wherein the bank-note processing machine (20a, 20b) comprises at least one checking device (25) which captures raw data and/or measuring data of the bank notes processed with the bank-note processing machine (20a, 20b), wherein the software module implemented on the application server (60) provides an application which is arranged for processing the raw data and/or measuring data captured by the checking device (25) of the bank-note processing machine (20a, 20b), **characterized in that**
the raw data and/or measuring data provided by the checking device (25) of the bank-note processing machine (20a, 20b) comprise serial-number data of the bank notes processed by the bank-note processing machine (20a, 20b), wherein the application server (60) is arranged, due to a serial-number application executed thereon, for storing in a serial-number archive the serial-number data provided by a bank-note processing machine (20a, 20b), and supervising the flow of bank notes between the bank-note processing machines (20a, 20b) that are in communication with the application server (60), using the serial-number data provided by a bank-note processing machine (20a, 20b) as well as using the serial-number archive.

2. The system (10) according to claim 1, wherein the central control device (26) of the bank-note processing machine (20a) is an industrial PC or a corresponding main board on which a PC operating system, such as Windows or Linux, is preferably installed.

3. The system (10) according to claim 1, wherein the application server (60) has stored therein, preferably for each type of bank-note processing machine, configuration data which can be employed by the bank-note processing machine (20a, 20b) in connection with a bank note's raw data and/or measuring data for rating or classifying a bank note, and wherein a configuration application is executed on the application server (60), so that the application server (60) is arranged for adapting the configuration data stored therein, preferably for each type of bank-note processing machine, on the basis of the raw data and/or measuring data, in order to make the adapted configuration data available to bank-note processing machines (20a, 20b) of the corresponding type.

4. The system (10) according to claim 1, wherein the application server (60), due to the serial-number application executed thereon, is arranged for extracting a bank note's serial number from a bank note's image data which are part of the raw data and/or measuring data provided by the bank-note processing machine (20a, 20b).

5. The system (10) according to claim 1, wherein a reporting application is executed on the application server (60), so that the latter is arranged for accordingly editing the raw data and/or measuring data provided by a bank-note processing machine (20a, 20b) and creating therefrom a report in a definable form.

6. The system (10) according to claim 1, wherein a servicing application is executed on the application server (60), so that the latter is arranged for determining and supervising the need for servicing of a bank-note processing machine (20a, 20b) on the basis of the raw data and/or measuring data provided by the bank-note processing machine (20a, 20b).

7. The system (10) according to any of the previous claims, wherein the bank-note processing machine (20a, 20b) and/or the application server (60) has stored thereon electronic keys by means of which the transfer of data between the bank-note processing machine (20a, 20b) and the application server can be encrypted and/or an authentication process can be carried out between the bank-note processing machine (20a, 20b) and the application server (60), wherein the authentication process is preferably a mutual challenge-response authentication.

8. A method for processing value documents, in particular bank notes, wherein the method comprises the following steps:
executing software modules on a bank-note processing machine (20a, 20b) which are required for the standard operation of the bank-note processing machine (20a, 20b); and
executing at least one further software module with optional applications on an application server (60) which can communicate with the bank-note processing machine (20a, 20b) via a communication network (50), wherein the at least one further software module provides an application which provides at least one function going beyond the standard operation of the bank-note processing machine,
capturing raw data and/or measuring data of the bank notes processed with the bank-note processing machine (20a, 20b) by a checking device (25) of the bank-note processing machine (20a, 20b),
Processing the raw data and/or measuring data captured by the checking device (25) of the bank-note processing machine (20a, 20b) by an application of the software module implemented on the application server (60), **characterized in that**
the raw data and/or measuring data provided by the checking device (25) of the bank-note processing machine (20a, 20b) are provided including serial-number data of the bank notes processed by the bank-note processing machine (20a, 20b), wherein the serial-number data provided by a bank-note processing machine (20a, 20b) are stored in a serial-number archive by a serial-number application executed on the application server (60), and the flow of bank notes between the bank-note processing machines (20a, 20b) that are in communication with the application server (60) is supervised using the serial-number data provided by a bank-note processing machine (20a, 20b) as well as using the serial-number archive.

## Revendications

1. Système (10) de traitement de documents de valeur, en particulier de billets de banque, cependant que le système (10) comprend :
au moins une machine de traitement de billets de banque (20a, 20b) ayant un équipement central de commande (26) sur lequel des modules de logiciel nécessaires au fonctionnement standard de la machine de traitement de billets de banque (20a, 20b) sont mis en oeuvre ; et
un serveur d'application (60) qui est en liaison avec la machine de traitement de billets de banque (20a, 20b) par l'intermédiaire d'un réseau de communication (50) et sur lequel au moins un autre module de logiciel ayant des applications optionnelles est mis en oeuvre, lequel est exécuté sur le serveur d'application et met à disposition de la machine de traitement de billets de banque (20a, 20b) une application qui met à disposition au moins une fonction allant au-delà du fonctionnement standard de la machine de traitement de billets de banque,
cependant que la machine de traitement de billets de banque (20a, 20b) comprend au moins un équipement de vérification (25) qui saisit des données brutes et/ou des données de mesure des billets de banque traités avec la machine de traitement de billets de banque (20a, 20b), cependant que le module mis en oeuvre sur le serveur d'application (60) met à disposition une application équipée pour traiter les données brutes et/ou les données de mesure saisies par l'équipement de vérification (25) de la machine de traitement de billets de banque (20a, 20b),
**caractérisé en ce que**
les données brutes et/ou les données de mesure mises à disposition par l'équipement de vérification (25) de la machine de traitement de billets de banque (20a, 20b) comprennent des données de numéros de série des billets de banque traités par la machine de traitement de billets de banque (20a, 20b), cependant que le serveur d'application (60), en raison d'une application pour numéros de série y étant exécutée, est équipé pour stocker dans une archive de numéros de série les données de numéros de série mises à disposition par une machine de traitement de billets de banque (20a, 20b), et pour, au moyen des données de numéros de série mises à disposition par une machine de traitement de billets de banque (20a, 20b) ainsi qu'au moyen de l'archive de numéros de série, contrôler le flux de billets de banque entre les machines de traitement de billets de banque (20a, 20b) qui sont en communication avec le serveur d'application (60).

2. Système (10) selon la revendication 1, cependant que l'équipement central de commande (26) de la machine de traitement de billets de banque (20a) consiste en un PC industriel ou en une carte mère correspondante sur lequel ou laquelle, de préférence, un système d'exploitation PC tel que par exemple Windows ou Linux est installé.

3. Système (10) selon la revendication 1, cependant que, dans le serveur d'application (60), de préférence pour chaque type de machine de traitement de billets de banque, des données de configuration sont stockées, lesquelles peuvent être utilisées par la machine de traitement de billets de banque (20a, 20b) en liaison avec les données brutes et/ou les données de mesure d'un billet de banque pour évaluer ou pour classifier un billet de banque, et cependant que, sur le serveur d'application (60), une application de configuration est exécutée, de telle sorte que le serveur d'application (60) est équipé pour, de préférence pour chaque type de machine de traitement de billets de banque, adapter sur la base des données brutes et/ou des données de mesure les données de configuration y étant stockées, afin de mettre à la disposition de machines de traitement de billets de banque (20a, 20b) du type correspondant les données de configuration adaptées.

4. Système (10) selon la revendication 1, cependant que, en raison de l'application pour numéros de série y étant exécutée, le serveur d'application (60) est équipé pour extraire le numéro de série d'un billet de banque à partir des données d'image d'un billet de banque qui font partie des données brutes et/ou des données de mesure d'un billet de banque mises à disposition par la machine de traitement de billets de banque (20a, 20b).

5. Système (10) selon la revendication 1, cependant que, cependant que, sur le serveur d'application (60), une application de rapport est exécutée, de telle sorte que ce dernier est équipé pour conditionner de manière correspondante les données brutes et/ou les données de mesure mises à disposition par une machine de traitement de billets de banque (20a, 20b) et pour établir à partie d'elles un rapport dans une forme définissable.

6. Système (10) selon la revendication 1, cependant que, cependant que, sur le serveur d'application (60), une application de maintenance est exécutée, de telle sorte que ce dernier est équipé pour, sur la base des données brutes et/ou des données de mesure mises à disposition par une machine de traitement de billets de banque (20a, 20b), déterminer et contrôler le besoin de maintenance de la machine de traitement de billets de banque (20a, 20b).

7. Système (10) selon une des revendications précédentes, cependant que, sur la machine de traitement de billets de banque (20a, 20b) et/ou sur le serveur d'application (60), une clé électronique est enregistrée, au moyen de laquelle la transmission de données entre la machine de traitement de billets de banque (20a, 20b) et le serveur d'application peut être cryptée et/ou une opération d'authentification entre la machine de traitement de billets de banque (20a, 20b) et le serveur d'application (60) peut être effectuée, cependant que l'opération d'authentification consiste de préférence en une authentification challenge/response réciproque.

8. Procédé de traitement de documents de valeur, en particulier de billets de banque, cependant que le procédé comprend les étapes suivantes :
exécution, sur une machine de traitement de billets de banque (20a, 20b), de modules de logiciel nécessaires au fonctionnement standard de la machine de traitement de billets de banque (20a, 20b) ; et
exécution d'au moins un autre module de logiciel ayant des applications optionnelles sur un serveur d'application (60) qui peut communiquer avec la machine de traitement de billets de banque (20a, 20b) par l'intermédiaire d'un réseau de communication (50), cependant que le au moins un autre module de logiciel met à disposition une application qui met à disposition au moins une fonction allant au-delà du fonctionnement standard de la machine de traitement de billets de banque,
saisie de données brutes et/ou de données de mesure des billets de banque traités avec la machine de traitement de billets de banque (20a, 20b), par un équipement de vérification (25) de la machine de traitement de billets de banque (20a, 20b),
traitement des données brutes et/ou des données de mesure saisies par l'équipement de vérification (25) de la machine de traitement de billets de banque (20a, 20b), par une application du module de logiciel mise en oeuvre sur le serveur d'application (60),
**caractérisé en ce que**
les données brutes et/ou les données de mesure mises à disposition par l'équipement de vérification (25) de la machine de traitement de billets de banque (20a, 20b) sont mises à disposition avec des numéros de série des billets de banque traités par la machine de traitement de billets de banque (20a, 20b), cependant que les données de numéros de série mises à disposition par une machine de traitement de billets de banque (20a, 20b) sont, par une application pour numéros de série exécutée sur le serveur d'application (60), stockées dans une archive de numéros de série, et, au moyen des données de numéros de série mises à disposition par une machine de traitement de billets de banque (20a, 20b) ainsi qu'au moyen de l'archive de numéros de série, le flux de billets de banque entre les machines de traitement de billets de banque (20a, 20b) qui sont en communication avec le serveur d'application (60) est contrôlé.
